# FASCICULE DE BREVET EUROPEEN

(11) **EP 3 665 077 B1**
(45) Date de publication et mention de la délivrance du brevet: **27.07.2022**
(21) Numéro de dépôt: 18758822.3
(22) Date de dépôt: 02.08.2018
(51) Int. Cl.: B64C 39/02, B64D 17/80, B64F 3/00

(54) **SYSTÈME DE SÉCURITÉ POUR OBJET VOLANT INHABITÉ**
SICHERHEITSSYSTEM FÜR UNBEMANNTES FLUGOBJEKT
SAFETY SYSTEM FOR UNMANNED FLYING OBJECT

(30) Priorité: 07.08.2017 FR 1757564
(43) Date de publication de la demande: 17.06.2020
(73) Titulaire: Université Claude Bernard Lyon 1, 69100 Villeurbanne (FR); Ecole Normale Supérieure de Lyon, 69342 Lyon Cedex 07 (FR); Centre National de la Recherche Scientifique, 75794 Paris Cedex 16 (FR)
(72) Inventeur: NIER, Olivier, 38640 Claix (FR); GRANDJEAN, Philippe, 38200 Jardin (FR); BATIER, Christophe, 69100 Villeurbanne (FR); BONAVITACOLA, Gilles, 01330 Bouligneux (FR); BORDES, Olivier, 38190 Bernin (FR); DAUM, Laurent, 92410 Ville D'Avray (FR); GOUISSET, Nils, 93400 Saint Ouen (FR)
(74) Mandataire: Be IP
(86) Numéro de dépôt international: PCT/EP2018/071033
(87) Numéro de publication internationale: WO 2019/030116

(56) Documents cités:
- WO-A1-2010/092253
- WO-A1-2017/117608
- US-A1- 2014 263 852
- US-A1- 2016 200 437

## Description

### DOMAINE DE L'INVENTION

La présente invention concerne le domaine technique général des objets volants inhabités pilotés par un utilisateur au sol, tels que des drones.

Plus précisément, la présente invention concerne un système de sécurité permettant d'éviter la chute d'un tel objet volant en cas de défaillance.

On entend, dans le cadre de la présente invention, par « *défaillance »,* tout type d'événement susceptible d'avoir un impact sur la sécurité des personnes, tel que :
- une panne d'alimentation,
- une panne de communication entre l'objet volant et un dispositif de commande distants,
- le survol d'une zone non prévue dans le périmètre de vol (objet volant s'approchant trop près d'un groupe de personnes au sol ou d'un autre objet volant inhabité, etc.).

### ARRIERE PLAN DE L'INVENTION

Dans le domaine des objets volants inhabités, la sécurité est un des enjeux majeurs.

La réglementation en vigueur limite l'emploi d'objets volants inhabités « *libres »* notamment en zone peuplée.

Pour permettre l'évolution d'un objet volant inhabité en zone peuplée, il est connu d'équiper l'objet volant inhabité d'un système filaire - tel qu'un câble - reliant l'objet volant inhabité au sol. Ce système filaire peut avoir un rôle sécurité mais peut aussi servir à alimenter l'objet volant inhabité en énergie électrique.

Il est également connu d'équiper l'objet volant inhabité d'un parachute. Le document US 2016/0318615 un système de sécurité pour un véhicule aérien sans pilote comprenant un porte-parachute monté sur le véhicule aérien, un parachute disposé dans le porte-parachute, un capteur de vol et un actionneur. Le capteur de vol est programmé pour détecter une anomalie des conditions de vol du véhicule aérien et pour transmettre un signal d'urgence actionneur en cas d'anomalie détectée. En réponse au signal d'urgence, l'actionneur déploie le parachute du porte-parachute.

Le document WO 2010/092253 concerne un aérodyne comportant une hélice de sustentation, une carène entourant l'hélice, et un moteur électrique pour l'entraînement en rotation de l'hélice par rapport à la carène. L'aérodyne comporte en outre un train d'atterrissage qui est relié à la carène par une liaison à cardan, le train d'atterrissage comportant des moyens de liaison servant à relier le train d'atterrissage à un câble permettant de retenir l'aérodyne captif d'une plateforme, et permettant d'alimenter le moteur électrique.

Le document US2014263852 décrit un appareil de bobinage qui comprend un mécanisme d'alimentation en filament destiné à déployer et à rembobiner un filament entre l'appareil de bobinage et un véhicule aérien, un capteur de géométrie de sortie servant à détecter une géométrie de sortie du filament hors de l'appareil de bobinage, et un dispositif de commande servant à commander le mécanisme d'alimentation pour faire avancer et rembobiner le filament sur la base de la géométrie de sortie.

Toutefois, ces systèmes ne permettent pas de prévenir la chute de l'objet volant inhabité en cas de défaillance. Ils permettent uniquement de limiter l'impact de la chute de l'objet volant inhabité.

Par ailleurs, ces systèmes ne permettent pas de limiter les dommages occasionnés à l'objet volant inhabité et aux équipements - tels qu'une caméra, etc. - qu'il porte en cas de chute.

Un but de la présente invention est de proposer un système de sécurité permettant d'éviter la chute d'un objet volant inhabité en cas de défaillance.

### BREVE DESCRIPTION DE L'INVENTION

A cet effet, l'invention propose un système de sécurité d'un objet volant inhabité piloté par un utilisateur au sol selon la revendication indépendante 1 annexée.

Des aspects préférés mais non limitatifs du système de sécurité selon l'invention sont définis dans les revendications dépendantes annexées.

L'invention concerne également un procédé de commande d'un système de sécurité d'un objet volant inhabité piloté par un utilisateur au sol selon la revendication indépendante 8 annexée.

Des aspects préférés mais non limitatifs du procédé de commande sont définis dans les revendications dépendantes annexées.

### BREVE DESCRIPTION DES DESSINS

D'autres avantages et caractéristiques du système selon l'invention ressortiront mieux de la description qui va suivre de plusieurs variantes d'exécution, données à titre d'exemples non limitatifs, à partir des dessins annexés sur lesquels :
- la figure 1 est une représentation schématique d'un système de sécurité (représenté ici activé suite à la détection d'une défaillance dans les conditions de vol de l'objet volant),
- la figure 2 est une représentation schématique d'un objet volant inhabité piloté par un utilisateur au sol (représenté avec une voilure déployée suite à la détection d'une défaillance dans les conditions de vol de l'objet volant),
- la figure 3 est une représentation schématique d'une tête d'un mât du système de sécurité,
- la figure 4 est une représentation schématique d'un enrouleur du système de sécurité,
- la figure 5 est une représentation schématique d'étapes d'un procédé de commande du système de sécurité.

### DESCRIPTION DETAILLEE DE L'INVENTION

On va maintenant décrire différents exemples du système de sécurité selon l'invention en référence aux figures. Dans ces différentes figures, les éléments équivalents sont désignés par la même référence numérique.

### 1. Généralités sur le système de sécurité

Le système de sécurité permet de ramener l'objet volant inhabité 1 dans une zone de rapatriement Z distante (par exemple de quelques mètres) du public en cas de défaillance de l'objet volant 1. La zone de rapatriement est par exemple située en hauteur, à une distance du sol supérieure ou égale à 3 mètres. Ceci permet d'assurer la sécurité du public en évitant la chute de l'objet volant 1 sur le public.

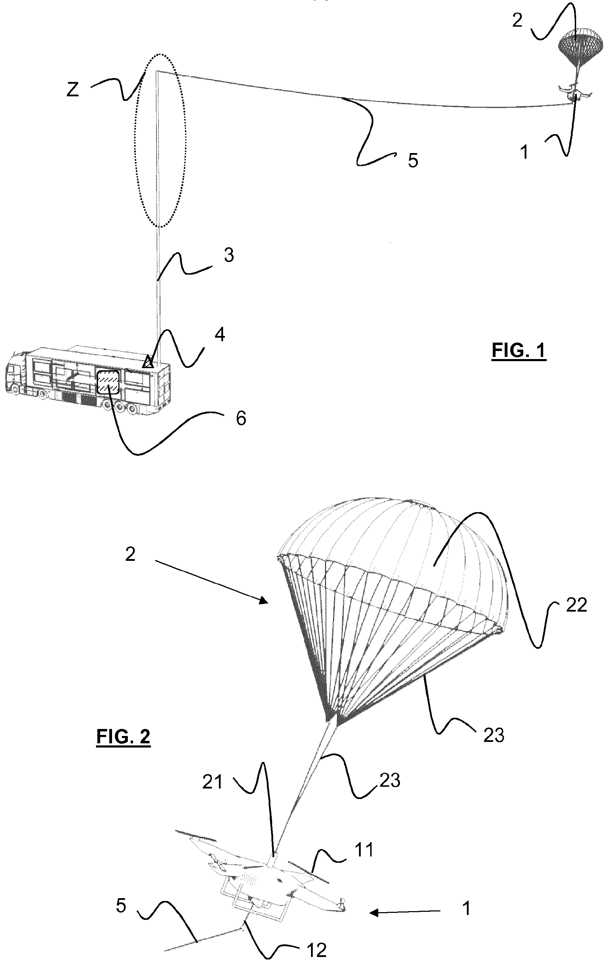

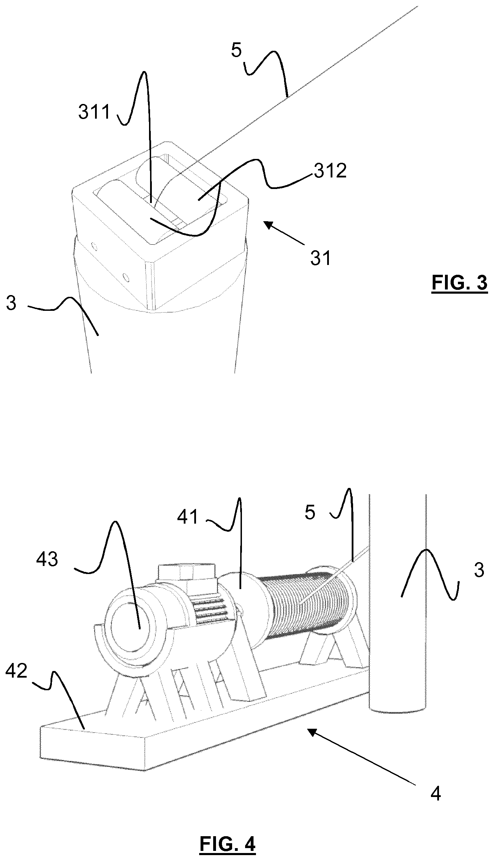

En référence aux figures 1 à 4, le système de sécurité comprend un support de voilure et une voilure 2, un mât 3, un enrouleur 4, un câble de retenue 5 et une station de contrôle 6. Dans la suite, on décrira individuellement les différents éléments constituant le système de sécurité puis on présentera leur principe de fonctionnement une fois le système de sécurité assemblé. Dans le mode de réalisation illustré à la figure 1, la zone de rapatriement Z consiste en un espace autour du sommet du mât, et dont les frontières s'étendent à la moitié de la hauteur du mât.

Le système de sécurité peut par exemple être embarqué sur une remorque de véhicule tel qu'un camion.

L'objet volant 1 peut comprendre un ou plusieurs rotor(s) 11 pour sa sustentation. Avantageusement, l'objet volant 1 peut également comprendre une tige articulée 12 destinée à raccordée au câble de retenue 5. Cette tige articulée 12 permet d'éloigner le câble de retenue 5 du (ou des) rotor(s) 11 afin d'éviter que le câble de retenue 5 s'emmêle dans le (ou dans un des) rotor(s) 11. L'objet volant 1 peut également comprendre un système de localisation tel qu'un système GPS (sigle de l'expression anglo-saxonne « *Global Positioning System »*) et des moyens de communication sans fil pour échanger des données avec le système de sécurité. Il peut de plus comprendre différents capteurs - capteurs d'assiette, capteur de vitesse, etc. - pour la mesure de données de vol permettant au système de sécurité la détection d'une défaillance de son mode de fonctionnement.

L'objet volant inhabité 1 peut par exemple être un drone piloté automatiquement (par une unité de commande) ou à partir du sol par un utilisateur muni d'une télécommande. Un tel objet volant 1 est bien connu de l'homme du métier et ne sera pas décrit plus en détails dans la suite.

L'objet volant 1 peut transporter différents équipements tels qu'une (ou plusieurs) caméra(s) embarquée(s). Il peut par exemple être utilisé pour réaliser des prises de vue dans le cadre d'événement télévisuels, tels que des évènements sportifs.

A cet effet, l'objet volant 1 est susceptible d'être utilisé dans des zones peuplées (stade, etc.). C'est pourquoi les inventeurs ont développé le système de sécurité décrit ci-après afin d'assurer la sécurité du public et limiter les risques de dégradation des équipements embarqués par l'objet volant 1 en cas de défaillance.

### 2. Eléments du système de sécurité

### 2.1. Support de voilure

Le système de sécurité comprend un support de voilure 21 destiné à être monté sur l'objet volant 1.

Le support de voilure 21 peut comprendre :
- une embase incluant :
   o un premier logement destiné à contenir la voilure 2, et éventuellement
   o un (ou plusieurs) deuxième(s) logement(s) pour la réception d'un (ou plusieurs) parachute(s) de secours, tel qu'un parachute hémisphérique,
- des éléments de liaison pour permettre la fixation du support de voilure 21 sur l'objet volant 1.

Le premier (respectivement le deuxième) logement peut comprendre une enveloppe cylindrique incluant un fond et une paroi latérale.

Avantageusement, le support de voilure 21 peut comprendre des moyens d'éjection de la voilure 2 en cas de défaillance. Ces moyens d'éjection peuvent par exemple être de type pyrotechnique. Ceci permet de disposer de moyens d'éjection puissants et réactifs.

Par exemple, les moyens d'éjection peuvent inclure un piston comprimé par un ressort maintenu comprimé par un élément de blocage destiné à être dégagé du ressort (par exemple par destruction de celui-ci) par un élément pyrotechnique (tel qu'une cisaille pyrotechnique) alimenté par un signal électrique de faible puissance.

Le support de voilure 21 comprend en outre des moyens de communication sans fil pour l'échange d'informations entre la station de contrôle 6 et le support de voilure 21, notamment pour permettre la réception d'un signal d'activation des moyens d'éjection de la voilure 2 en cas de détection d'une défaillance. Les moyens de communication sans fil peuvent comprendre une antenne de type radiofréquence (WIFI, Bluetooth, etc.) pour l'émission et/ou la réception d'ondes radio.

Le support de voilure 21 peut également comprendre des moyens de déclenchement mécaniques pour expulser le parachute de secours en cas d'avarie des moyens d'éjection de la voilure 2.

### 2.2. Voilure

La voilure 2 comprend au moins une aile 22 et des suspentes 23.

Les suspentes 23 sont de fines cordes dont le cœur peut être composé de polyéthylène. Elles permettent de relier l'aile 22 au support de voilure 21.

L'aile 22 est de préférence fabriquée dans un matériau léger et résistant. Elle peut être de type parachute ascensionnel ou parapente. L'aile peut être bi-surface et inclure des caissons s'étendant entre une voile supérieure formant extrados et une voile inférieure formant intrados. L'air est destiné à s'engouffrer dans les caissons de l'aile au niveau de son bord d'attaque pour lui donner sa forme et permettre de générer la portance suffisante pour maintenir l'objet volant en altitude. En variante, l'aile peut être monosurface, c'est-à-dire être dépourvue de voile inférieure formant intrados.

### 2.3. Mât

Le mât 3 peut être de type télescopique pour faciliter son transport.

Le mât 3 peut comprendre des moyens de liaisons articulés à sa base pour permettre le pivotement du mât 3 autour d'un axe de rotation entre une position horizontale et une position verticale. Le mât 3 peut également comprendre des sections adjacentes télescopiques pouvant coulisser l'une par rapport à l'autre entre des positions rétractées et déployées.

Avantageusement, le mât 3 peut de plus comprendre un moteur et/ou un vérin pour permettre le déplacement des sections de mât entre lesdites positions rétractées et déployées. De même, un moteur et/ou un vérin peut être associé aux moyens de liaison articulés pour faciliter le pivotement du mât 3 autour de son axe de rotation entre les positions horizontales et verticales.

La tête de mât (opposée à sa base) comporte un guide de câble 31 permettant un déplacement du câble de retenue 5 du système de sécurité dans toutes les directions (i.e. déplacement à 360°). Le guide de câble 31 comprend :
- deux cylindres inférieurs 311 dont les axes de rotation s'étendent parallèlement l'un à l'autre, et
- deux cylindres supérieurs 312 dont les axes de rotation s'étendent parallèlement l'un à l'autre.

Les cylindres supérieurs 312 sont disposés sur les cylindres inférieurs 311 de sorte que les axes de rotation des cylindres supérieurs 312 s'étendent perpendiculairement aux axes de rotation des cylindres inférieurs 311.

Le mât peut également comprendre un (ou plusieurs) coussin(s) gonflable(s) dans lequel (lesquels) de l'air (ou un autre gaz) peut être injecté très rapidement pour le(s) gonfler et ainsi amortir un éventuel choc entre l'objet volant et le mât. Ceci permet de réduire les risques de détérioration de l'objet volant et/ou de l'équipement qu'il transporte lors du le rapatriement de l'objet volant 1. Le (ou les) coussin(s) gonflable(s) peut (peuvent) par exemple être monté(s) au niveau de la tête de mât.

Optionnellement, des moyens d'éclairage peuvent être intégrés au mât 3, notamment à l'une desdites sections adjacentes télescopiques, et des moyens d'alimentation en énergie électrique peuvent également être prévus pour fournir une énergie électrique :
- aux moteurs et/ou aux vérins du mât 3 permettant de faire pivoter le mât 3 et de déplacer les sections de mât,
- aux moyens d'éclairage (22) du mât 3, et à des capteurs associés au câble de retenue 5 du système de sécurité et qui seront décrits plus en détails dans la suite.

### 2.4. Enrouleur

L'enrouleur 4 permet d'envider ou de dévider le câble de retenue 5 du système de sécurité.

L'enrouleur 4 comprend un tambour 41 monté rotatif sur une embase support 42. L'enrouleur 4 comprend également un moteur 43 connecté à un arbre du tambour 41 pour entrainer le tambour 41 en rotation.

Dans certaines variantes de réalisation, le moteur 43 (commandé par la station de contrôle 6) est apte à mettre en rotation le tambour 41 dans un seul sens de rotation pour permettre l'enroulement du câble de retenue 5, le moteur 43 étant découplé du tambour 41 lors du déroulement du câble de retenue 5.

Dans d'autres variantes de réalisation, le moteur 43 (commandé par la station de contrôle 6) est apte à mettre en rotation le tambour 41 dans les deux sens de rotation (sens trigonométrique et sens rétrograde). Ceci permet de maintenir la tension du câble de retenue 5 dans une plage de tension spécifique lors du dévidage du câble de retenue 5.

Avantageusement, l'enrouleur 4 peut comprendre un capteur de mesure de la longueur de câble déroulé et/ou un capteur de mesure de la tension du câble déroulé.

L'enrouleur peut également comprendre un bouton d'arrêt d'urgence permettant à un utilisateur de désactiver le moteur 43 en cas de problème.

### 2.5. Câble de retenue

Le câble de retenue 5 peut être constitué de fibres réalisées dans un matériau résistant, non extensible et léger, tel que du Kevlar^{®} ou du Dyneema^{®}. L'utilisation de Dyneema^{®} présente l'avantage de permettre l'obtention d'un câble aussi résistant qu'un câble acier mais dix fois plus léger. Par ailleurs, les câbles en Kevlar^{®} ou en Dyneema^{®} présentent l'avantage d'être peu extensibles. A titre purement indicatif, le poids du câble de retenue peut être compris entre 0.5 et 3 grammes par mètres, préférentiellement entre 1 et 1.5 gramme par mètre. Ceci permet de disposer d'un câble de retenue dont le poids n'a pas d'incidence sur les conditions de vol de l'objet volant.

Le câble de retenue 5 est destiné à être fixé au tambour 41 de l'enrouleur 4 par l'une de ses extrémités, et à l'objet volant 1 par son autre extrémité.

L'enrouleur 4 étant positionné à la base du mât 3, le câble de retenue 5 s'étend entre la base et la tête du mât le long de moyens d'attache prévus le long du mât. Avantageusement, une gaine peut être prévue autour du câble de retenue 5 entre l'enrouleur et la tête de mât pour limiter l'usure du câble de retenue 5 contre le guide de câble 31 et les moyens d'attache prévus le long du mât 3.

Avantageusement, le guide de câble 31 peut comprendre des capteurs - tel qu'un (ou plusieurs) accéléromètre(s) et un (ou plusieurs) magnétomètre(s) - pour estimer l'orientation du câble de retenue 5 par rapport à un repère de référence, et ainsi en déduire la position de l'objet volant 1 (en tenant compte de la longueur de câble déroulé).

### 2.6. Station de contrôle

La station de contrôle 6 permet de commander les différents éléments du système de sécurité et notamment :
- le mât 3, et plus précisément les moteurs/vérins du mât 3 pour permettre son déplacement d'une position horizontale à une position verticale et pour permettre le déplacement des sections du mât d'une position rétractée à une position déployée,
- l'enrouleur 4 pour l'enroulage et/ou le déroulage du câble de retenue 5, et
- le support de voilure 21 pour l'éjection de la voilure 2 et éventuellement l'expulsion du parachute de secours en cas de défaillance.

La station de contrôle 6 peut comprendre un calculateur (par exemple un processeur), des moyens de saisie (par exemple un clavier, un écran tactile, etc.), des moyens d'affichage (par exemple un écran), et des moyens d'émission/réception (incluant par exemple une antenne) pour échanger des données avec l'objet volant 1, l'enrouleur 4, le support de voilure 21, le mât 3, etc.

La station de contrôle 6 est par exemple composée d'une (ou plusieurs) station(s) de travail, et/ou d'un (ou plusieurs) ordinateur(s) et/ou d'un téléphone portable, et/ou d'une tablette électronique (tel qu'un IPAD^{®}), un assistant personnel (ou « *PDA* », sigle de l'expression anglo-saxonne « *Personal Digital Assistant »*), et/ou de tout autre type de terminal connu de l'homme du métier.

La station de contrôle 6 comprend de préférence des moyens de communication avec et/ou sans fil pour échanger des données de mesure et des signaux de commande avec les différents éléments du système de sécurité ainsi qu'avec l'objet volant 1.

A partir de données de mesure acquises par des capteurs :
- de l'objet volant 1, et/ou
- de l'enrouleur 4, et/ou
- du mât 3, et/ou
- du guide de câble 31,
la station de contrôle 6 est apte à détecter une éventuelle défaillance dans le mode de fonctionnement de l'objet volant 1.

En variante, la détection d'une défaillance dans le mode de fonctionnement de l'objet volant peut être obtenue par un opérateur distant.

Lorsqu'une défaillance dans les conditions de vol de l'objet volant inhabité est détectée, une procédure de sécurité peut être initiée soit par la station de contrôle 6, soit par l'opérateur distant - par exemple par actionnement d'un bouton d'urgence.

L'initiation de la procédure de sécurité induit le rapatriement de l'objet volant 1 par la station de contrôle 6. Plus précisément, la station de contrôle 6 est programmée pour émettre des signaux de commande aux différents éléments du système de sécurité afin de ramener l'objet volant 1 dans une zone de rapatriement Z (par exemple située en haut du mât 3).

En particulier, lorsqu'une défaillance dans les conditions de vol de l'objet volant 1 est détectée, la station de contrôle 6 émet (simultanément ou séquentiellement / dans cet ordre ou dans un autre) :
- un signal de commande à l'objet volant 1 afin de désactiver le (ou les) rotor(s) 11
- un signal de commande aux moyens d'éjection du support de voilure 21 afin de déployer la voilure souple 2,
- un signal de commande au moteur électrique 43 couplé au tambour 41 de l'enrouleur 4 afin d'enrouler le câble de retenue 5 sur le tambour 41,

L'émission de ces signaux de contrôle induit le retour de l'objet volant 1 dans la zone de rapatriement Z.

La vitesse angulaire de rotation du moteur 43 peut varier au cours du rapatriement de l'objet volant 1 dans la zone de rapatriement Z. Notamment, la vitesse de rotation du moteur 43 (et donc du tambour 41 de l'enrouleur 4) peut varier en fonction :
- de la distance entre l'objet volant 1 et la zone de rapatriement Z (ou de la longueur de câble déroulée), et/ou
- de la tension du câble de retenue.

Le fait que la vitesse angulaire de rotation soit variable permet de limiter les dommages occasionnés à l'objet volant 1 et aux équipements qu'il porte lors de son rapatriement.

La vitesse angulaire de rotation du moteur 43 est :
- égale à une première valeur si la tension du câble de retenue (respectivement la distance entre l'objet volant et la zone de rapatriement) est inférieure (respectivement supérieure) à une valeur seuil, et
- égale à une deuxième valeur plus faible que la première valeur si la tension du câble de retenue (respectivement la distance entre l'objet volant et la zone de rapatriement) est supérieure (respectivement inférieure) à la valeur seuil.

En variante, la vitesse angulaire de rotation peut être inversement proportionnelle à la tension du câble de retenue (respectivement proportionnelle à la distance entre l'objet volant et la zone de rapatriement). Le fait de diminuer la vitesse de rotation du tambour 41 lorsque la tension du câble de retenue augmente permet de rapatrier l'objet volant en maintenant son altitude sensiblement constante, cette tension dépendant notamment des vents contraires à la direction de rapatriement qui peuvent être exercées sur l'objet volant, etc.

### 3. Principe de fonctionnement du système de sécurité

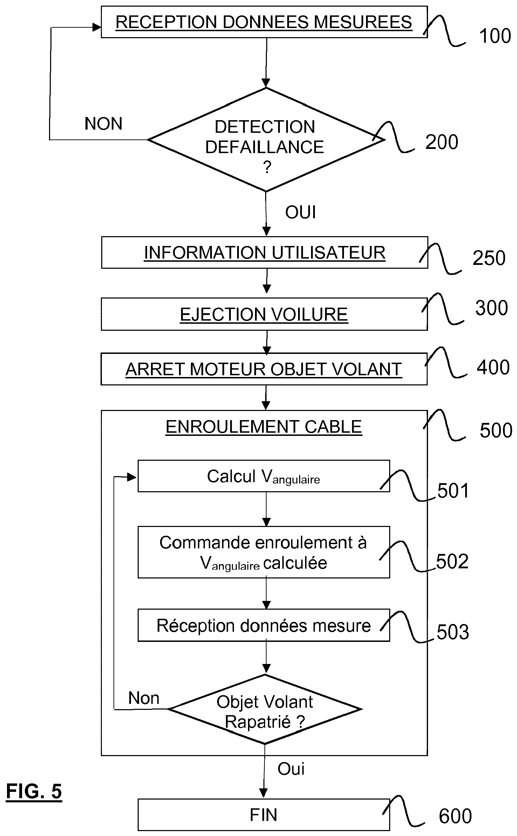

Le principe de fonctionnement du système de sécurité décrit précédemment va maintenant être présenté en référence à la figure 5.

Lors d'un vol de l'objet volant 1, les capteurs du système de sécurité (capteurs embarqués sur l'objet volant 1, et/ou montés sur le mât 3, et/ou associés à l'enrouleur 4 et/ou disposés au sol) mesurent différents paramètres relatifs au vol de l'objet volant 1 tels que :
- l'assiette de l'objet volant,
- la vitesse du vent,
- la position de l'objet volant,
- l'altitude de l'objet volant,
- la longueur de câble déroulé,
- la tension de la portion de câble déroulé,
- la quantité d'énergie contenue dans des moyens de stockage d'énergie de l'objet volant, etc.

Les valeurs mesurées sont transmises à la station de contrôle 6 (étape 100) via des moyens de communication (avec ou sans fil). Ces valeurs mesurées peuvent ensuite :
- être affichées sur des moyens d'affichage à l'attention d'un opérateur,
- être utilisées par la station de contrôle 6,
pour détecter une éventuelle défaillance dans le mode de fonctionnement de l'objet volant 1.

Lorsqu'une défaillance est détectée (étape 200), la station de contrôle 6 commande l'activation du support de voilure 21 afin de déployer la voilure 2 (étape 300). Avantageusement, un signalement de la défaillance pour information peut être affiché sur les moyens d'affichage de la station de contrôle 6 (étape 250). Ceci permet d'informer l'utilisateur (pilote ou tiers) qu'une défaillance a été détectée.

Dans une étape du procédé, la station de contrôle 6 commande l'arrêt du (ou des) moteur(s) de l'objet volant 1 (étape 400).

La station de contrôle 6 commande également l'activation du moteur électrique de l'enrouleur couplé au tambour de sorte à enrouler le câble de retenue sur le tambour (étape 500). L'étape d'activation comprend une sous-étape (501) consistant à calculer une vitesse angulaire de rotation du tambour 41. Cette vitesse angulaire de rotation peut être calculée en utilisant des paramètres mesurés par les capteurs tels que :
- la longueur de câble déroulé, et/ou
- la tension du câble, et/ou
- la distance entre l'objet volant et la zone de rapatriement.

Bien entendu, d'autres paramètres mesurés peuvent être utilisés pour calculer la vitesse angulaire de rotation. Par exemple, la station de contrôle 6 peut prendre en compte la vitesse du vent ou l'altitude de l'objet volant dans le calcul de la vitesse angulaire de rotation. La station de contrôle 6 peut également prendre en compte le poids de l'objet volant 1 dans son calcul, etc.

La vitesse angulaire de rotation calculée est utilisée pour commander le moteur 43 de l'enrouleur de sorte à déplacer le tambour 41 à la vitesse angulaire de rotation calculée (sous-étape 502).

Du fait de la résultante entre la portance de la voilure 2 et la tension du câble de retenue 5, l'objet volant 1 est ramené vers la zone de rapatriement Z à une altitude sensiblement stable par rapport à l'altitude de déclenchement de la voilure.

Au fur et à mesure du rapatriement de l'objet volant 1, les paramètres mesurés par les capteurs tels que :
- la longueur de câble déroulé, et/ou
- la tension du câble, et/ou
- la distance entre l'objet volant et la zone de rapatriement
sont envoyés vers la station de contrôle (sous-étape 503) pour mettre à jour la vitesse angulaire de rotation calculée pour le tambour 41.

Ainsi, la station de contrôle 6 adapte la vitesse angulaire de rotation du tambour 41 tout au long de la procédure de rapatriement.

Lorsque la distance entre l'objet volant 1 et la zone de rapatriement Z (ou la longueur de déroulé) est inférieure à une valeur seuil (par exemple la moitié de la hauteur du mât), la station de contrôle 6 commande la désactivation du moteur 43 couplé au tambour 41 de sorte que l'enroulement du câble de retenue 5 est interrompu (étape 600). Un opérateur peut alors récupérer l'objet volant. Pour cela, le câble de retenue est dévidé du tambour à vitesse réduite de sorte que l'objet volant suspendu au mât soit ramené au pied du mât.

### Conclusions

Le système de sécurité décrit précédemment permet de limiter les risques de chute au sol d'un objet volant en cas de défaillance. L'adaptation de la vitesse d'enroulage du câble de retenue sur l'enrouleur (en fonction de la tension du câble de retenue et/ou de la distance entre l'objet volant et la zone de rapatriement) permet :
- d'une part de rapatrier l'objet volant tout en maintenant son altitude sensiblement stable,
- d'autre part de limiter les dommages occasionnés à l'objet volant et aux équipements qu'il porte.

La station de contrôle surveille et maintient en sécurité l'objet volant dans une zone de vol prédéfinie autour du mât. D'un côté, la station de contrôle collecte des données mesurées par des capteurs situés sur l'objet volant et au sol, d'un autre la station de contrôle commande l'enrouleur et le support de voilure.

La station de contrôle est indépendante de l'objet volant. Elle permet la mise en sécurité automatique de l'objet volant afin d'éviter qu'il ne tombe au sol causant des dégâts humains ou matériels.

L'une des originalités du système de sécurité selon l'invention vient du fait que la station de contrôle se base à la fois sur des données mesurées transmises par l'objet volant, et sur des données mesurées au sol (i.e. par des capteurs intégrés dans le mât, l'enrouleur, etc.).

Un aspect avantageux de la station de contrôle vient de sa capacité à recevoir une multitude d'informations (issues des différents capteurs, etc.), à les analyser et à déclencher des actions correctives nécessaires sans intervention humaine.

Les calculs mis en œuvre dans la station de contrôle (notamment pour l'estimation de la vitesse angulaire de rotation de l'enrouleur) s'effectuent en temps réel pour garantir un temps de réaction adapté à la situation.

Les fonctions principales de la station de contrôle sont les suivantes :
- Le rapatriement automatique de l'objet volant
- La gestion de la tension du câble de retenue
- Le retour d'informations liées à la sécurité.

Les données suivantes peuvent être collectées par les différents capteurs du système de sécurité :
- Par les capteurs intégrés à l'objet volant :
   o Position GPS, Altitude barométrique,
   o Températures moteurs,
   o Tension batterie,
   o Consommation batterie,
   o Magnétomètres,
   o Accéléromètres,
   o Niveau de signal commande de l'objet volant,
- Par les capteurs intégrés à l'enrouleur :
   o Vitesse de rotation,
   o Longueur de câble enroulée/déroulée,
   ∘ Tension du câble,
   ∘ Angle horizontal du câble,
   ∘ Angle vertical du câble,
- Par d'autres capteurs au sol :
   ∘ Vitesse instantanée du vent,
   ∘ Vitesse moyenne du vent,
   ∘ Orientation instantanée du vent,
   ∘ Orientation moyenne du vent,
   ∘ Humidité relative du vent.

D'autres données utilisées dans les calculs réalisés par la station de contrôle peuvent être préconfigurés et stockées dans une mémoire de la station de contrôle :
∘ Masse de l'objet volant,
∘ Masse du câble par mètre,
∘ Temps d'éjection de la voilure,
∘ Vitesse angulaire de rotation minimum de l'enrouleur,
∘ Vitesse angulaire de rotation maximum de l'enrouleur,
∘ Hauteur du mât.

Les actions effectuées par la station de contrôle en cas de détection d'une défaillance peuvent être les suivantes :
- Enroulement du câble de retenue sur l'enrouleur à vitesse angulaire de rotation réglable et variable,
- Déclenchement d'éjection de la voilure,
- Déclenchement de l'arrêt des moteurs de l'objet volant

Les éléments induisant la détection d'une défaillance peuvent être les suivants :
- Tension batterie de l'objet volant inférieure à une première tension seuil critique,
- Tension d'alimentation de l'enrouleur inférieure à une deuxième tension seuil critique,
- L'objet volant sort de sa zone de vol autorisée
- Altitude de l'objet volant inférieure (respectivement supérieure) à une altitude seuil minimale (respectivement maximale),
- Inclinaison de l'objet volant anormale (magnétomètre)
- L'objet volant ne garde pas son cap (magnétomètre),
- Coupure de liaison radio détectée, etc.

Le lecteur aura compris que de nombreuses modifications peuvent être apportées au système de sécurité décrit précédemment sans sortir matériellement des nouveaux enseignements et des avantages décrits ici. Par conséquent, toutes les modifications de ce type sont destinées à être incorporées dans l'étendue de la protection, dans la mesure où elles entrent dans la portée des revendications jointes.

## Revendications

1. Système de sécurité d'un objet volant (1) inhabité piloté par un utilisateur au sol, le système de sécurité permettant de réduire les risques de chute de l'objet volant (1) en cas de défaillance, le système de sécurité comprenant :
- un support de voilure (21) destiné à être monté sur l'objet volant (1),
- une voilure (2) souple, telle qu'un parachute, disposée sur le support de voilure (21),
- un enrouleur (4) fixé dans une zone de rapatriement (Z) de l'objet volant (1), l'enrouleur (4) incluant un tambour d'enroulement (41) et un moteur électrique (43) d'entraînement du tambour (41),
- un câble de retenue (5) destiné à être relié par l'une de ses extrémités à l'objet volant (1) et relié au tambour d'enroulement (41) par son autre extrémité,
- une station de contrôle (6) pour, lorsqu'une défaillance dans les conditions de vol de l'objet volant (1) est détectée :
∘ commander l'activation du support de voilure (21) afin de déployer la voilure souple (2),
∘ commander l'activation du moteur électrique (43) afin d'entrainer le tambour (41) en rotation de sorte à enrouler le câble de retenue (5) sur le tambour (41),
le système de sécurité incluant des capteurs pour la collecte de la distance entre l'objet volant et la zone de rapatriement, ou de la longueur de câble déroulée, et/ou de la tension du câble de retenue, lesdits capteurs étant choisis parmi :
- des capteurs destinés à être intégrés à l'objet volant pour l'acquisition d'une position de l'objet volant, et/ou
- des capteurs intégrés à l'enrouleur pour l'acquisition d'une longueur de câble enroulée/ déroulée, et/ou d'une tension du câble,
**caractérisé en ce que** la station de contrôle (6) est programmée pour faire varier la vitesse angulaire de rotation du moteur électrique (43) au cours du rapatriement de l'objet volant (1) en fonction de :
- la distance entre l'objet volant et la zone de rapatriement, ou de
- la longueur de câble déroulée, et/ou de
- la tension du câble de retenue,
ladite variation consistant à diminuer la vitesse angulaire de rotation du moteur électrique (43) :
- lorsque la distance entre l'objet volant (1) et la zone de rapatriement (Z) ou la longueur de câble déroulé est inférieure à un seuil, et/ou
- lorsque la tension du câble de retenue (5) est supérieure à une tension seuil.

2. Système de sécurité selon la revendication 1, dans lequel la station de contrôle (6) est programmée pour :
o calculer (501) une vitesse angulaire de rotation en fonction d'une tension de câble de retenue (5) mesurée,
o commander (502) l'activation du moteur électrique (43) afin d'entrainer le tambour (41) en rotation à la vitesse angulaire de rotation calculée,
o réitérer les étapes précédentes si la distance entre l'objet volant (1) et la zone de rapatriement (Z) est supérieure à une valeur de consigne prédéterminée.

3. Système de sécurité selon la revendication 1, dans lequel la station de contrôle (6) est programmée pour :
o calculer (501) une vitesse angulaire de rotation en fonction de la distance entre l'objet volant (1) et la zone de rapatriement (Z), et
o commander (502) l'activation du moteur électrique (43) afin d'entrainer le tambour (41) en rotation à la vitesse angulaire de rotation calculée,
o réitérer les étapes précédentes si la distance entre l'objet volant (1) et la zone de rapatriement (Z) est supérieure à une valeur de consigne prédéterminée.

4. Système de sécurité selon l'une quelconque des revendications 1 à 3, dans lequel la station de contrôle (6) comprend un calculateur pour :
o recevoir (100, 503) une information représentative de la position de l'objet volant (1) et une information représentative de la tension du câble de retenue,
o estimer une distance entre l'objet volant (1) et la zone de rapatriement (Z),
o calculer (501) une vitesse angulaire de rotation en fonction de la distance estimée et/ou de l'information représentative de la tension du câble de retenue,
o réitérer les étapes précédentes si la distance estimée est supérieure à une valeur de consigne.

5. Système de sécurité selon la revendication 4, dans lequel le calculateur tient en outre compte d'au moins un paramètre choisi parmi :
o la vitesse du vent,
o le poids de l'objet volant,
o l'altitude de l'objet volant,
pour calculer une vitesse angulaire de rotation du moteur (43).

6. Système de sécurité selon l'une quelconque des revendications 4 ou 5, dans lequel l'information représentative de la position de l'objet volant comprend :
o une longueur mesurée du câble déroulé,
o un premier angle mesuré entre le câble de retenue et un plan de référence horizontal,
o un deuxième angle mesuré entre le câble de retenue et un plan de référence vertical,
le calculateur étant apte à estimer la position de l'objet volant à partir de la longueur mesurée et des premier et deuxième angles mesurés.

7. Système de sécurité selon l'une quelconque des revendications 1 à 6, lequel comprend en outre un mât (3), par exemple télescopique, l'objet volant (1) étant destiné à être fixé à l'extrémité libre du mât (3) par le câble de retenue (5).

8. Procédé de commande d'un système de sécurité d'un objet volant (1) inhabité piloté par un utilisateur au sol, le système de sécurité permettant de réduire les risques de chute de l'objet volant (1) en cas de défaillance, le système de sécurité comprenant :
- un support de voilure (21) monté sur l'objet volant (1),
- une voilure souple (2), telle qu'un parachute, disposée sur le support de voilure (21),
- un enrouleur (4) fixé dans une zone de rapatriement (Z) de l'objet volant (1), l'enrouleur (4) incluant un tambour d'enroulement (41) et un moteur électrique (43) d'entraînement du tambour (41),
- un câble de retenue (5) relié par l'une de ses extrémités à l'objet volant (1) et relié au tambour d'enroulement (41) par son autre extrémité,
le procédé comprenant, lorsqu'une défaillance dans les conditions de vol de l'objet volant est détectée, les étapes consistant à :
o commander (300) à partir d'une station de contrôle (6), l'activation du support de voilure (21) afin de déployer la voilure souple,
o commander (500) à partir de la station de contrôle, l'activation du moteur électrique afin d'entrainer le tambour en rotation de sorte à enrouler le câble de retenue sur le tambour
**caractérisé en ce que** l'étape consistant à commander (500) l'activation du moteur électrique (43) comprend une sous étape consistant à faire varier la vitesse angulaire de rotation du moteur électrique (43) au cours du rapatriement de l'objet volant (1) en fonction de la distance entre l'objet volant et la zone de rapatriement, ou de la longueur de câble déroulée, et/ou de la tension du câble de retenue, ladite variation consistant à diminuer la vitesse angulaire de rotation du moteur électrique (43) :
- lorsque la distance entre l'objet volant (1) et la zone de rapatriement (Z) ou la longueur de câble (5) déroulé est inférieure à un seuil, et/ou
- lorsque la tension du câble de retenue (5) est supérieure à une tension seuil.

9. Procédé selon la revendication 8, dans lequel
l'étape consistant à commander l'activation du moteur électrique comporte les sous-étapes suivantes :
- calcul d'une vitesse angulaire de rotation en fonction d'une tension de câble mesurée,
- activation du moteur électrique à la vitesse angulaire de rotation calculée,
- réitération des deux sous-étapes précédentes si la distance entre l'objet volant et la zone de rapatriement est supérieure à une valeur de consigne prédéterminée.

10. Procédé selon la revendication 9, dans lequel
la sous-étape de calcul consiste à assigner une première valeur de vitesse angulaire de rotation du moteur lorsque la tension du câble de retenue est supérieure à une tension seuil prédéterminée et assigner une deuxième valeur de vitesse angulaire de rotation supérieure à la première valeur lorsque la tension du câble de retenue est inférieure à la tension seuil prédéterminée.

11. Procédé selon la revendication 8, dans lequel
l'étape consistant à commander l'activation du moteur électrique comporte les sous-étapes suivantes :
o calcul d'une vitesse angulaire de rotation en fonction de la distance entre l'objet volant et la zone de rapatriement, et
o activation du moteur électrique à la vitesse angulaire de rotation calculée,
o réitérer les étapes précédentes si la distance entre l'objet volant et la zone de rapatriement est supérieure à une valeur de consigne prédéterminée.

12. Procédé selon la revendication 11, dans lequel
la sous-étape de calcul consiste à assigner une première valeur de vitesse angulaire de rotation du moteur lorsque la distance entre l'objet volant et la zone de rapatriement est inférieure à une distance seuil prédéterminée et assigner une deuxième valeur de vitesse angulaire de rotation supérieure à la première valeur lorsque la distance entre l'objet volant et la zone de rapatriement est supérieure à la distance seuil prédéterminée.

13. Procédé selon la revendication 8, dans lequel
l'étape consistant à commander l'activation du moteur électrique comporte les sous-étapes suivantes :
∘ recevoir une information représentative de la position de l'objet volant et une information représentative de la tension du câble de retenue,
∘ estimer une distance entre l'objet volant et la zone de rapatriement,
∘ calculer une vitesse angulaire de rotation en fonction de la distance estimée et/ou de l'information représentative de la tension du câble de retenue,
o réitérer les étapes précédentes si la distance estimée est supérieure à une valeur de consigne prédéterminée.

14. Procédé selon la revendication 13, dans lequel
la sous étape de calcul d'une vitesse angulaire tient en outre compte d'au moins un paramètre choisi parmi :
∘ la vitesse du vent,
∘ le poids de l'objet volant,
∘ l'altitude de l'objet volant,
pour calculer une vitesse angulaire de rotation du moteur

15. Procédé selon l'une quelconque des revendications 13 ou 14, dans lequel l'information représentative de la position de l'objet volant comprend :
∘ une longueur mesurée du câble déroulé,
∘ un premier angle mesuré entre le câble de retenue et un plan de référence horizontal,
∘ un deuxième angle mesuré entre le câble de retenue et un plan de référence vertical,
le procédé comprenant, préalablement à la sous-étape consistant à estimer une distance entre l'objet volant et la zone de rapatriement, une sous-étape consistant à déterminer la position de l'objet volant à partir de la longueur mesurée et des premier et deuxième angles mesurés.

## Patentansprüche

1. Sicherheitssystem eines unbemannten Flugobjekts (1), das von einem Benutzer auf dem Boden gesteuert wird, wobei das Sicherheitssystem erlaubt, die Absturzrisiken des Flugobjekts (1) bei einer Fehlfunktion zu reduzieren, wobei das Sicherheitssystem umfasst:
- einen Segelhalter (21), der bestimmt ist, an dem Flugobjekt (1) angebracht zu sein,
- ein flexibles Segel (2) wie ein Fallschirm, der über dem Segelhalter (21) angeordnet ist,
- eine Wickeleinrichtung (4), die in einer Rückführungszone (Z) des Flugobjekts (1) befestigt ist, wobei die Wickeleinrichtung (4) eine Wickeltrommel (41) und einen Elektromotor (43) zum Antreiben der Trommel (41) einschließt,
- ein Haltekabel (5), das bestimmt ist, durch das eine seiner Enden mit dem Flugobjekt (1) verbunden zu sein und mit der Wickeltrommel (41) durch sein anderes Ende verbunden zu sein,
- eine Überwachungsstation (6), um, wenn eine Fehlfunktion unter den Flugbedingungen des Flugobjekts (1) ermittelt wird:
o die Aktivierung des Segelhalters (21) zu befehlen, um das flexible Segel (2) zu entfalten,
o die Aktivierung des Elektromotors (43) zu befehlen, um die Trommel (41) derart rotatorisch anzutreiben, dass das Haltekabel (5) auf die Trommel (41) gewickelt wird,
wobei das Sicherheitssystem Sensoren für das Sammeln des Abstands zwischen dem Flugobjekt und der Rückführungszone oder der Länge des abgewickelten Kabels und/oder der Spannung des Haltekabels einschließt, wobei die Sensoren ausgewählt sind aus:
- Sensoren, die bestimmt sind, in das Flugobjekt für die Ermittlung einer Position des Flugobjekts integriert zu sein, und/oder
- Sensoren, die in die Wickeleinrichtung für die Ermittlung einer aufgewickelten/abgewickelten Länge des Kabels und/oder einer Spannung des Kabels integriert sind,
**dadurch gekennzeichnet, dass** die Überwachungsstation (6) programmiert ist, um die Rotationswinkelgeschwindigkeit des Elektromotors (43) während der Rückführung des Flugobjekts (1) zu ändern in Abhängigkeit von:
- dem Abstand zwischen dem Flugobjekt und der Rückführungszone, oder
- der Länge des abgewickelten Kabels, und/oder
- der Spannung des Haltekabels,
wobei die Änderung darin besteht, die Rotationswinkelgeschwindigkeit des Elektromotors (43) zu verringern:
- wenn der Abstand zwischen dem Flugobjekt (1) und der Rückführungszone (Z) oder die abgewickelte Kabellänge kürzer als ein Grenzwert ist, und/oder
- wenn die Spannung des Haltekabels (5) größer als eine Grenzwertspannung ist.

2. Sicherheitssystem nach Anspruch 1, wobei die Überwachungsstation (6) programmiert ist, um:
o eine Rotationswinkelgeschwindigkeit in Abhängigkeit von einer gemessenen Spannung des Haltekabels (5) zu berechnen (501),
o die Aktivierung des Elektromotors (43) zu befehlen (502), um die Trommel (41) in der berechneten Rotationswinkelgeschwindigkeit rotatorisch anzutreiben,
o die vorangehenden Schritte zu wiederholen, wenn der Abstand zwischen dem Flugobjekt (1) und der Rückführungszone (Z) größer als ein vorher festgelegter Sollwert ist.

3. Sicherheitssystem nach Anspruch 1, wobei die Überwachungsstation (6) programmiert ist, um:
o eine Rotationswinkelgeschwindigkeit in Abhängigkeit vom Abstand zwischen dem Flugobjekt (1) und der Rückführungszone (Z) zu berechnen (501), und
o die Aktivierung des Elektromotors (43) zu befehlen (502), um die Trommel (41) in der berechneten Rotationswinkelgeschwindigkeit rotatorisch anzutreiben,
o die vorhergehenden Schritte zu wiederholen, wenn der Abstand zwischen dem Flugobjekt (1) und der Rückführungszone (Z) größer als ein vorher festgelegter Sollwert ist.

4. Sicherheitssystem nach einem der Ansprüche 1 bis 3, wobei die Überwachungsstation (6) einen Rechner umfasst, um:
o eine Information zu erhalten (100, 503), die für die Position des Flugobjekts (1) repräsentativ ist und eine Information, die für die Spannung des Haltekabels repräsentativ ist,
o einen Abstand zwischen dem Flugobjekt (1) und der Rückführungszone (Z) zu schätzen,
o eine Rotationswinkelgeschwindigkeit in Abhängigkeit von dem geschätzten Abstand und/oder von der Information, die für die Spannung des Haltekabels repräsentativ ist, zu berechnen (501),
o die vorhergehenden Schritte zu wiederholen, wenn der geschätzte Abstand größer als ein Sollwert ist.

5. Sicherheitssystem nach Anspruch 4, wobei der Rechner ferner mindestens einen Parameter berücksichtigt, der ausgewählt ist aus:
∘ der Windgeschwindigkeit,
∘ dem Gewicht des Flugobjekts,
∘ der Höhe des Flugobjekts,
um eine Rotationswinkelgeschwindigkeit des Motors (43) zu berechnen.

6. Sicherheitssystem nach einem der Ansprüche 4 oder 5, wobei die Information, die für die Position des Flugobjekts repräsentativ ist, umfasst:
o eine gemessene Länge des abgewickelten Kabels,
o einen ersten Winkel, gemessen zwischen dem Haltekabel und einer horizontalen Bezugsebene,
o einen zweiten Winkel, gemessen zwischen dem Haltekabel und einer vertikalen Bezugsebene,
wobei der Rechner imstande ist, die Position des Flugobjekts ausgehend von der gemessenen Länge und dem gemessenen ersten und zweiten Winkel zu schätzen.

7. Sicherheitssystem nach einem der Ansprüche 1 bis 6, das ferner einen beispielsweise teleskopischen Mast (3) umfasst, wobei das Flugobjekt (1) bestimmt ist, durch das Haltekabel (5) am freien Ende des Masts (3) befestigt zu sein.

8. Verfahren zur Steuerung eines Sicherheitssystems eines unbemannten Flugobjekts (1), das von einem Benutzer auf dem Boden gesteuert wird, wobei das Sicherheitssystem erlaubt, die Absturzrisiken des Flugobjekts (1) bei einer Fehlfunktion zu reduzieren, wobei das Sicherheitssystem umfasst:
- einen Segelhalter (21), der an dem Flugobjekt (1) angebracht ist,
- ein flexibles Segel (2) wie ein Fallschirm, der über dem Segelhalter (21) angeordnet ist,
- eine Wickeleinrichtung (4), die in einer Rückführungszone (Z) des Flugobjekts (1) befestigt ist, wobei die Wickeleinrichtung (4) eine Wickeltrommel (41) und einen Elektromotor (43) zum Antreiben der Trommel (41) einschließt,
- ein Haltekabel (5), das durch das eine seiner Enden mit dem Flugobjekt (1) verbunden ist und mit der Wickeltrommel (41) durch sein anderes Ende verbunden ist,
wobei das Verfahren, wenn eine Fehlfunktion unter den Flugbedingungen des Flugobjekts ermittelt wird, die Schritte umfasst, die darin bestehen:
o ausgehend von einer Überwachungsstation (6) die Aktivierung des Segelhalters (21) zu befehlen (300), um das flexible Segel zu entfalten,
o ausgehend von der Überwachungsstation die Aktivierung des Elektromotors zu befehlen (500), um die Trommel derart rotatorisch anzutreiben, dass das Haltekabel auf die Trommel gewickelt wird,
**dadurch gekennzeichnet, dass** der Schritt, der darin besteht, die Aktivierung des Elektromotors (43) zu befehlen (500), einen Unterschritt umfasst, der darin besteht, die Rotationswinkelgeschwindigkeit des Elektromotors (43) während der Rückführung des Flugobjekts (1) in Abhängigkeit vom Abstand zwischen dem Flugobjekt und der Rückführungszone oder von der Länge des abgewickelten Kabels und/oder von der Spannung des Haltekabels zu ändern, wobei die Änderung darin besteht, die Rotationswinkelgeschwindigkeit des Elektromotors (43) zu verringern:
- wenn der Abstand zwischen dem Flugobjekt (1) und der Rückführungszone (Z) oder die Länge des abgewickelten Kabels (5) kürzer als ein Grenzwert ist, und/oder
- wenn die Spannung des Haltekabels (5) größer als eine Grenzwertspannung ist.

9. Verfahren nach Anspruch 8, wobei
der Schritt, der darin besteht, die Aktivierung des Elektromotors zu befehlen, die folgenden Unterschritte aufweist:
- Berechnen einer Rotationswinkelgeschwindigkeit in Abhängigkeit von einer gemessenen Spannung des Kabels,
- Aktivieren des Elektromotors in der berechneten Rotationswinkelgeschwindigkeit,
- Wiederholen der beiden vorhergehenden Unterschritte, wenn der Abstand zwischen dem Flugobjekt und der Rückführungszone größer als ein vorher festgelegter Sollwert ist.

10. Verfahren nach Anspruch 9, wobei
der Unterschritte des Berechnens darin besteht, einen ersten Rotationswinkelgeschwindigkeitswert des Motors zuzuweisen, wenn die Spannung des Haltekabels größer als eine vorher festgelegte Grenzwertspannung ist und einen zweiten Rotationswinkelgeschwindigkeitswert zuzuweisen, der größer als der erste Wert ist, wenn die Spannung des Haltekabels kleiner als die vorher festgelegte Grenzwertspannung ist.

11. Verfahren nach Anspruch 8, wobei
der Schritt, der darin besteht, die Aktivierung des Elektromotors zu befehlen, die folgenden Unterschritte aufweist:
- Berechnen einer Rotationswinkelgeschwindigkeit in Abhängigkeit vom Abstand zwischen dem Flugobjekt und der Rückführungszone, und
- Aktivieren des Elektromotors in der berechneten Rotationswinkelgeschwindigkeit,
- Wiederholen der beiden vorhergehenden Unterschritte, wenn der Abstand zwischen dem Flugobjekt und der Rückführungszone größer als ein vorher festgelegter Sollwert ist.

12. Verfahren nach Anspruch 11, wobei
der Unterschritte des Berechnens darin besteht, einen ersten Rotationswinkelgeschwindigkeitswert des Motors zuzuweisen, wenn der Abstand zwischen dem Flugobjekt und der Rückführungszone kleiner als ein vorher festgelegter Grenzwertabstand ist und einen zweiten Rotationswinkelgeschwindigkeitswert zuzuweisen, der größer als der erste Wert ist, wenn der Abstand zwischen dem Flugobjekt und der Rückführungszone größer als der vorher festgelegte Grenzwertabstand ist.

13. Verfahren nach Anspruch 8, wobei
der Schritt, der darin besteht, die Aktivierung des Elektromotors zu befehlen, die folgenden Unterschritte aufweist:
o Erhalten einer Information, die für die Position des Flugobjekts repräsentativ ist und einer Information, die für die Spannung des Haltekabels repräsentativ ist,
o Schätzen eines Abstands zwischen dem Flugobjekt und der Rückführungszone,
o Berechnen einer Rotationswinkelgeschwindigkeit in Abhängigkeit von dem geschätzten Abstand und/oder von der Information, die für die Spannung des Haltekabels repräsentativ ist,
o Wiederholen der vorhergehenden Schritte, wenn der geschätzte Abstand größer als ein vorher festgelegter Sollwert ist.

14. Verfahren nach Anspruch 13, wobei
der Unterschritt des Berechnens einer Winkelgeschwindigkeit ferner mindestens einen Parameter berücksichtigt, der ausgewählt ist aus:
o der Windgeschwindigkeit,
o dem Gewicht des Flugobjekts,
o der Höhe des Flugobjekts,
um eine Rotationswinkelgeschwindigkeit des Motors zu berechnen.

15. Verfahren nach einem der Ansprüche 13 oder 14, wobei die Information, die für die Position des Flugobjekts repräsentativ ist, umfasst:
o eine gemessene Länge des abgewickelten Kabels,
o einen ersten Winkel, gemessen zwischen dem Haltekabel und einer horizontalen Bezugsebene,
o einen zweiten Winkel, gemessen zwischen dem Haltekabel und einer vertikalen Bezugsebene,
wobei das Verfahren vor dem Unterschritt, der darin besteht, einen Abstand zwischen dem Flugobjekt und der Rückführungszone zu schätzen, einen Unterschritt umfasst, der darin besteht, die Position des Flugobjekts ausgehend von der gemessenen Länge und dem gemessenen ersten und zweiten Winkel zu schätzen.

## Claims

1. A safety system for an unmanned flying object (1) piloted by a user on the ground, the safety system making it possible to reduce the risks of falling of the flying object (1) in case of failure, the safety system comprising:
- a canopy support (21) intended to be mounted on the flying object (1),
- a flexible canopy (2), such as a parachute, disposed on the canopy support (21),
- a winder (4) fixed in a receipt area (Z) for the flying object (1), the winder (4) including a winding drum (41) and an electric motor (43) for driving the drum (41),
- a retaining cable (5) intended to be connected by one of its ends to the flying object (1) and connected to the winding drum (41) by its other end,
- a control station (6) for, when a failure in flight conditions of the flying object (1) is detected:
o commanding the activation of the canopy support (21) in order to deploy the flexible canopy (2),
o commanding the activation of the electric motor (43) in order to drive the drum (41) in rotation so as to wind the retaining cable (5) on the drum (41),
the safety system including sensors for collecting the distance between the flying object and the receipt area, or the unwound cable length, and/or the tension of the retaining cable, said sensors being chosen among:
- sensors intended to be integrated into the flying object for acquiring a position of the flying object, and/or
- sensors integrated into the winder for acquiring a wound/unwound cable length, and/or a tension of the cable, **characterized in that** the control station (6) is programmed to vary the angular speed of rotation of the electric motor (43) during the receipt of the flying object (1) based on:
- the distance between the flying object and the receipt area, or
- the unwound cable length, and/or
- the tension of the retaining cable,
said variation consisting in reducing the angular speed of rotation of the electric motor (43):
- when the distance between the flying object (1) and the receipt area (Z) or the unwound cable length is less than a threshold, and/or
- when the tension of the retaining cable (5) is greater than a threshold tension.

2. The safety system according to claim 1, wherein the control station (6) is programmed to:
o calculate (501) an angular speed of rotation based on a measured tension of the retaining cable (5),
o command (502) the activation of the electric motor (43) in order to drive the drum (41) in rotation at the calculated angular speed of rotation,
o repeat the previous steps if the distance between the flying object (1) and the receipt area (Z) is greater than a predetermined setpoint value.

3. The safety system according to claim 1, wherein the control station (6) is programmed to:
o calculate (501) an angular speed of rotation based on the distance between the flying object (1) and the receipt area (Z), and
o command (502) the activation of the electric motor (43) in order to drive the drum (41) in rotation at the calculated angular speed of rotation,
o repeat the previous steps if the distance between the flying object (1) and the receipt area (Z) is greater than a predetermined setpoint value.

4. The safety system according to any one of claims 1 to 3, wherein the control station (6) comprises a computer to:
o receive (100, 503) information representative of the position of the flying object (1) and information representative of the tension of the retaining cable,
o estimate a distance between the flying object (1) and the receipt area (Z),
o calculate (501) an angular speed of rotation based on the estimated distance and/or on the information representative of the tension of the retaining cable,
o repeat the previous steps if the estimated distance is greater than a setpoint value.

5. The safety system according to claim 4, wherein the computer further takes into account at least one parameter chosen among:
o the speed of the wind,
o the weight of the flying object,
o the altitude of the flying object,
to calculate an angular speed of rotation of the motor (43) .

6. The safety system according to any one of claims 4 or 5, wherein the information representative of the position of the flying object comprises:
o a measured length of the unwound cable,
o a first angle measured between the retaining cable and a horizontal reference plane,
o a second angle measured between the retaining cable and a vertical reference plane,
the computer being able to estimate the position of the flying object from the measured length and the first and second measured angles.

7. The safety system according to any one of claims 1 to 6, which further comprises a mast (3), for example a telescopic mast, the flying object (1) being intended to be fixed to the free end of the mast (3) by the retaining cable (5).

8. A method for commanding a safety system for an unmanned flying object (1) piloted by a user on the ground, the safety system making it possible to reduce the risks of falling of the flying object (1) in case of failure, the safety system comprising:
- a canopy support (21) mounted on the flying object (1),
- a flexible canopy (2), such as a parachute, disposed on the canopy support (21),
- a winder (4) fixed in a receipt area (Z) for the flying object (1), the winder (4) including a winding drum (41) and an electric motor (43) for driving the drum (41),
- a retaining cable (5) connected by one of its ends to the flying object (1) and connected to the winding drum (41) by its other end,
the method comprising, when a failure in flight conditions of the flying object is detected, the steps of:
o commanding (300), from a control station (6), the activation of the canopy support (21) in order to deploy the flexible canopy,
o commanding (500), from the control station, the activation of the electric motor in order to drive the drum in rotation so as to wind the retaining cable on the drum
**characterized in that** the step consisting in commanding (500) the activation of the electric motor (43) comprises a sub-step consisting in varying the angular speed of rotation of the electric motor (43) during the receipt of the flying object (1) based on the distance between the flying object and the receipt area, or on the unwound cable length, and/or on the tension of the retaining cable, said variation consisting in reducing the angular speed of rotation of the electric motor (43):
- when the distance between the flying object (1) and the receipt area (Z) or the unwound cable (5) length is less than a threshold, and/or
- when the tension of the retaining cable (5) is greater than a threshold tension.

9. The method according to claim 8, wherein
the step consisting in commanding the activation of the electric motor includes the following sub-steps:
- calculating an angular speed of rotation based on a measured cable tension,
- activating the electric motor at the calculated angular speed of rotation,
- repeating the two previous sub-steps if the distance between the flying object and the receipt area is greater than a predetermined setpoint value.

10. The method according to claim 9, wherein
the calculation sub-step consists in assigning a first value of angular speed of rotation of the motor when the tension of the retaining cable is greater than a predetermined threshold tension and assigning a second value of angular speed of rotation greater than the first value when the tension of the retaining cable is less than the predetermined threshold tension.

11. The method according to claim 8, wherein
the step consisting in commanding the activation of the electric motor includes the following sub-steps:
o calculating an angular speed of rotation based on the distance between the flying object and the receipt area, and
o activating the electric motor at the calculated angular speed of rotation,
o repeating the previous steps if the distance between the flying object and the receipt area is greater than a predetermined setpoint value.

12. The method according to claim 11, wherein
the calculation sub-step consists in assigning a first value of angular speed of rotation of the motor when the distance between the flying object and the receipt area is less than a predetermined threshold distance and assigning a second value of angular speed of rotation greater than the first value when the distance between the flying object and the receipt area is greater than the predetermined threshold distance.

13. The method according to claim 8, wherein
the step consisting in commanding the activation of the electric motor includes the following sub-steps:
o receiving information representative of the position of the flying object and information representative of the tension of the retaining cable,
o estimating a distance between the flying object and the receipt area,
o calculating an angular speed of rotation based on the estimated distance and/or on the information representative of the tension of the retaining cable,
o repeating the previous steps if the estimated distance is greater than a predetermined setpoint value.

14. The method according to claim 13, wherein
the sub-step of calculating an angular speed further takes into account at least one parameter chosen among:
o the speed of the wind,
o the weight of the flying object,
o the altitude of the flying object,
to calculate an angular speed of rotation of the motor.

15. The method according to any one of claims 13 or 14, wherein the information representative of the position of the flying object comprises:
o a measured length of the unwound cable,
o a first angle measured between the retaining cable and a horizontal reference plane,
o a second angle measured between the retaining cable and a vertical reference plane,
the method comprising, prior to the sub-step consisting in estimating a distance between the flying object and the receipt area, a sub-step consisting in determining the position of the flying object from the measured length and the first and second measured angles.
